# EUROPEAN PATENT SPECIFICATION

(11) **EP 2 551 398 B1**
(45) Date of publication and mention of the grant of the patent: **22.12.2021**
(21) Application number: 12175901.3
(22) Date of filing: 11.07.2012
(51) Int. Cl.: D06F 37/30, D06F 37/22

(54) **Motor usable with washing machine and washing machine having the same**
Motor für Waschmaschinen und mit diesem Motor ausgestattete Waschmaschine
Moteur utilisable dans une machine à laver et machine à laver dotée de celui-ci

(30) Priority: 27.07.2011 KR 20110074460
(43) Date of publication of application: 30.01.2013
(73) Proprietor: Samsung Electronics Co., Ltd., Suwon-si, Gyeonggi-do, 443-742 (KR)
(72) Inventor: Bae, Il Sung, Gyeonggi-do (KR); Lee, Moo Hyung, Seoul (KR); Park, Jae Seuk, Gyeonggi-do (KR); Cho, Sung Jin, Gyeonggi-do (KR); Kim, Sung Jong, Gyeonggi-do (KR)
(74) Representative: Grünecker Patent- und Rechtsanwälte PartG mbB

(56) References cited:
- EP-A1- 1 529 870
- WO-A2-2011/115384
- US-A- 5 913 951
- None

## Description

### BACKGROUND

### 1. Field

Embodiments of the present disclosure relate to a washing machine having a configuration to supply electric power to a drum of the washing machine.

### 2. Description of the Related Art

A washing machine serves to wash clothes using electric power. A general washing machine includes a tub to accommodate wash water therein, a drum rotatably installed within the tub, and a motor to enable rotational driving of the drum.

If the drum is rotated by the motor in a state in which laundry and wash water containing detergent are input into the drum, contaminants adhered to the laundry are removed via friction between the laundry, drum and wash water containing detergent.

Washing machines may be divided into indirect-drive type washing machines in which power of a motor is transmitted to a drum via a power transmission mechanism, such as a belt and a pulley, and direct-drive type washing machines in which power of a motor is directly transmitted to a shaft of a drum.

In a direct-type type washing machine, a motor includes a stator mounted to a tub, a rotor arranged around the stator to electromagnetically interact with the stator, and a drive shaft to transmit rotational power of the rotor to a drum.

The drum may be provided with an electric device to be driven by electric power, which may require a complex configuration for connection of an electric wire used to supply electric power to the electric device.

In addition, it may be necessary to mount an external power source to supply electric power to the electric device within a cabinet of the washing machine, which may increase the size of the cabinet.

WO 2011/115384 A discloses a laundry machine which comprises two or more balancing units which are movable independently of each other. In the sensing step the weight of the laundry is sensed and in this sensing step a substantially same phase difference between the balancing units and rotating of the drum is maintained. In an eccentricity-reducing step the eccentricity of the drum is reduced, while the drum is rotated and simultaneously at least one of the balancing units is moved.

US 5,913,951 A discloses a radially oriented motor for a fluid balance ring. A motor is mounted at an orientation of 90° relative to the rotational axis of the washing machine spinner. The balance system includes a valve to control movement of fluid within the ring. Corresponding valve is mounted at an angle with respect to a tangent of the spinner.

### SUMMARY

Therefore, it is an object of the present invention to provide a washing machine with a motor that exhibits self-power generation, and .which includes a drive shaft to enable supply of electric power to an electric device within a drum.

Additional aspects of the invention will be set forth in part in the description which follows and, in part, will be apparent from the description, or may be learned by practice of the invention.

This object is solved by the features of claim 1.

Advantageous embodiments are disclosed by the subclaims.

For example, the drive shaft may take the form of a hollow circular column to allow passage of an electric wire through the hollow drive shaft.

The drive shaft may take the form of a circular column and may be provided with a longitudinal groove in a curved peripheral surface of the circular column to allow passage of an electric wire along the groove.

The drive shaft may be formed as a conductor for transmission of electricity.

The at least one electric device may include a balancing device drive unit.

The at least one electric device may include a light emitting unit to illuminate the interior of the drum.

The washing machine may further include a power source placed within the cabinet so as to supply electric power, and the electric power supplied by the power source may be transmitted to the at least one electric device through the drive shaft.

The washing machine may further include a slip ring provided behind the motor and configured to enable supply of electric power from the power source to the at least one electric device even if the drum is rotated.

The power-generation unit may include a plurality of magnets affixed in a circumferential direction to a surface of the stator adjacent to the rotor, and a plurality of coils affixed in the circumferential direction at positions corresponding to the plurality of magnets to a surface of the rotor adjacent to the stator.

The power-generation unit may include a generator placed at a radial lateral surface of the rotor, the generator being rotatable about an axis thereof, and a rib placed to surround the rotor so as to come into contact with a surface of the generator, an opposite surface of the generator being adjacent to the rotor.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a view illustrating the configuration of a washing machine in accordance with an embodiment of the present invention;
FIG. 2 is a perspective view illustrating the configuration of a motor usable with a washing machine in accordance with an embodiment of the present invention;
FIG. 3 is a sectional view of the motor illustrated in FIG. 2;
FIG. 4A is a view illustrating a drive shaft in accordance with one embodiment of the present invention;
FIG. 4B is a view illustrating a drive shaft in accordance with another embodiment of the present invention;
FIG. 4C is a view illustrating a drive shaft in accordance with a further embodiment of the present invention;
FIG. 5 is a view illustrating the configuration of a washing machine in accordance with another embodiment of the present invention;
FIG. 6 is a view illustrating a motor usable with a washing machine and a rear surface of a tub in accordance with another embodiment of the present invention;
FIG. 7 is a sectional view illustrating a generator of a motor usable with a washing machine in accordance with another embodiment of the present invention; and
FIG. 8 is a view illustrating the configuration of a washing machine in accordance with a further embodiment of the present invention.

### DETAILED DESCRIPTION

Reference will now be made in detail to the embodiments of the present invention, examples of which are illustrated in the accompanying drawings, wherein like reference numerals refer to like elements throughout.

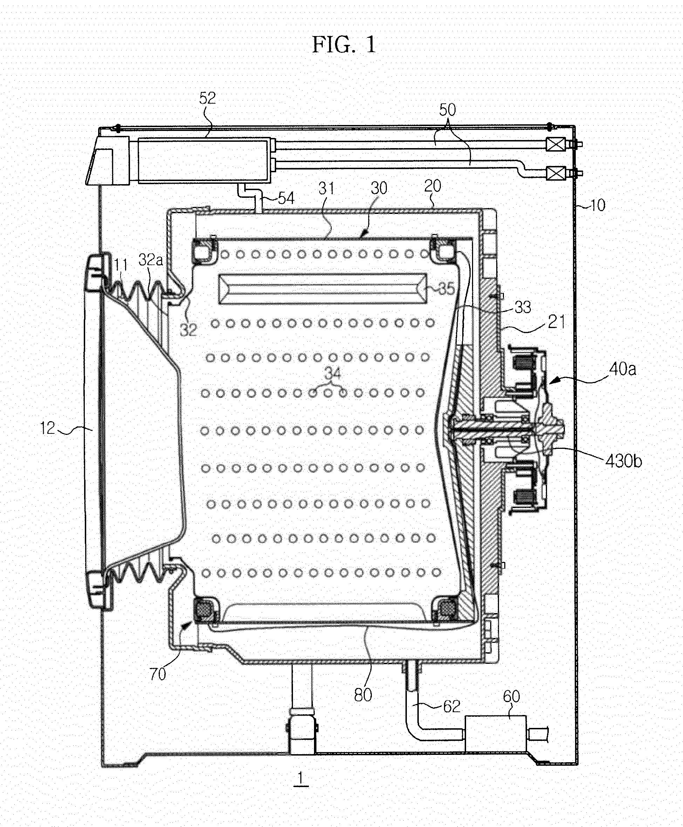

FIG. 1 is a view illustrating the configuration of a washing machine in accordance with an embodiment of the present invention.

As illustrated in FIG. 1, the washing machine 1 includes a cabinet 10 defining the external appearance of the washing machine 1, a tub 20 placed within the cabinet 10, a drum 30 rotatably placed within the tub 20, and a motor 40a to drive the drum 30.

The cabinet 10 is provided at a front side thereof with an entrance 11 through which laundry is input into the drum 30. The entrance 11 is opened or closed by a door 12 installed to the front side of the cabinet 10.

A water supply pipe 50 is installed above the tub 20 and serves to supply wash water into the tub 20. One end of the water supply pipe 50 is connected to an external water source (not shown) and the other end of the water supply pipe 50 is connected to a detergent feeding device 52.

The detergent feeding device 52 is connected to the tub 20 using a connecting pipe 54. The water supplied through the water supply pipe 50 is introduced into the tub 20 along with detergent by way of the detergent feeding device 52.

A drain pump 60 and a drain pipe 62 are installed below the tub 20 and serve to discharge the interior water of the tub 20 to the outside of the cabinet 10.

The drum 30 includes a cylindrical body 31, a front plate 32 affixed to a front end of the cylindrical body 31 and a rear plate 33 affixed to a rear end of the cylindrical body 31. The front plate 32 is provided with an opening 32a for entrance/exit of laundry.

A plurality of through-holes 34 for passage of wash water is perforated in the periphery of the drum 30. Also, a plurality of lifters 35 is provided at an inner peripheral surface of the drum 30 to raise and drop laundry during rotation of the drum 30.

A drive shaft 430b is placed between the drum 30 and the motor 40a. One end of the drive shaft 430b is connected to the rear plate 33 of the drum 30, and the other end of the drive shaft 430b extends outward of a rear surface 21 of the tub 20. If the motor 40a drives the drive shaft 430b, the drum 30 connected to the drive shaft 430b is rotated about the drive shaft 430b.

In a washing operation, the motor 40a rotates the drum 30 forward or rearward at a low speed and thus, laundry within the drum 30 is repeatedly raised and dropped, enabling removal of contaminants from the laundry.

In a dehydrating operation, the motor 40a rotates the drum 30 at a high speed in a given direction, causing water to be separated from the laundry by applying centrifugal force to the laundry.

If the laundry is gathered on a particular region rather than being evenly distributed within the drum 30 while the drum 30 is rotated to perform the dehydrating operation, the drum 30 exhibits unstable rotation and thus, generation of vibration and noise. For this reason, the washing machine 1 further includes a balancing device 70 to stabilize rotational motion of the drum 30.

One end of an electric wire 80 is connected to the motor 40a and extends through the drive shaft 430b until the other end of the electric wire 80 is connected to the balancing device 70.

The electric wire 80 connected to the balancing device 70 takes charge of the supply of electric power to the balancing device 70.

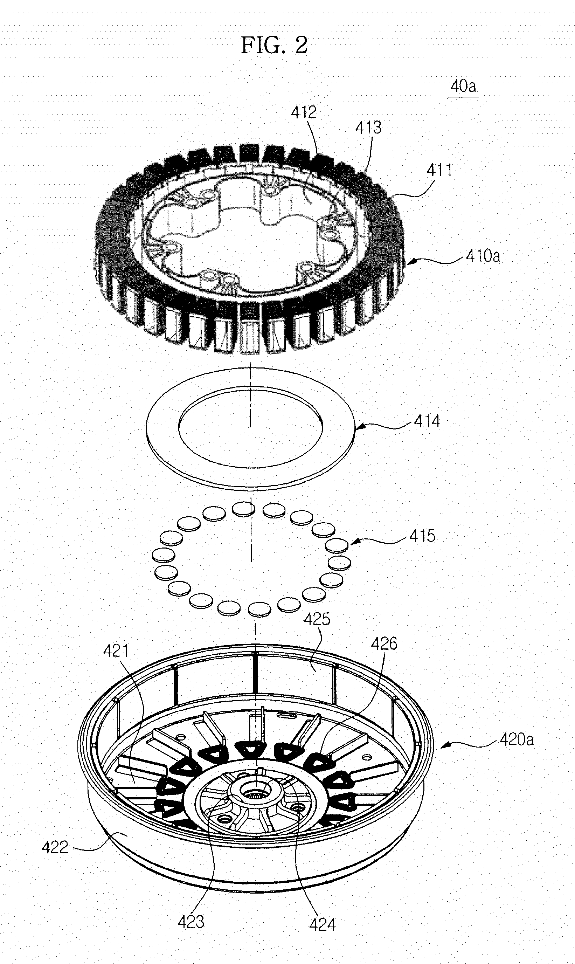

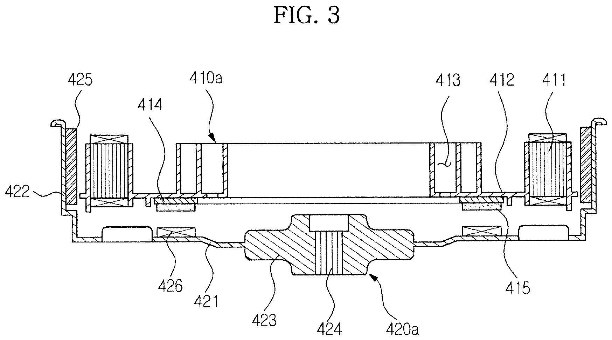

The motor 40a includes a power-generation unit (not shown) to generate electric power, and the electric power is supplied to the balancing device 70 through the electric wire 80. Although only the balancing device 70 to receive electric power is illustrated in the drawing, other electric devices to be driven by electric power may be provided. The configuration of the power-generation unit will be described below with reference to FIGS. 2 and 3.

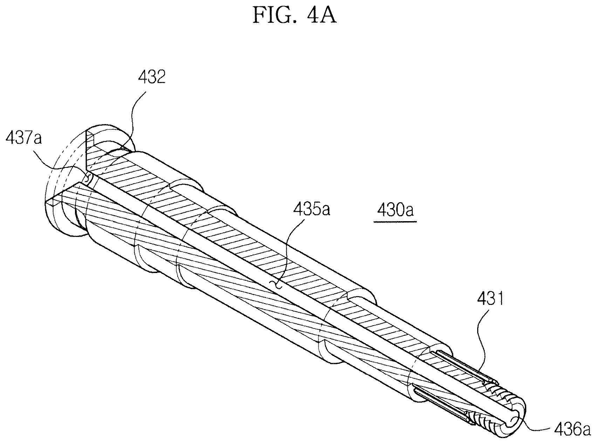

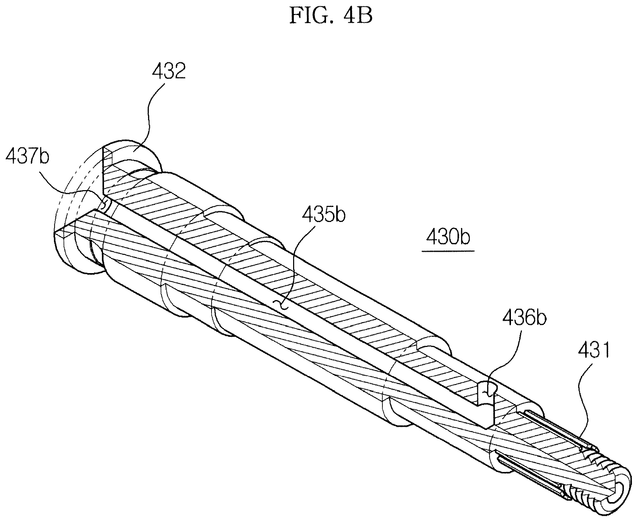

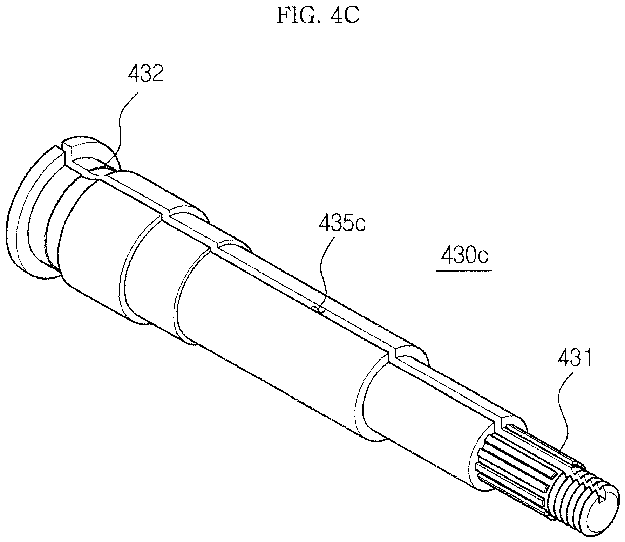

The configuration of the drive shaft 430b for penetration of the electric wire 80 will be described below with reference to FIGS. 4A, 4B and 4C.

FIG. 2 is a perspective view illustrating the configuration of the motor usable with the washing machine in accordance with an embodiment of the present invention, and FIG. 3 is a sectional view of the motor illustrated in FIG. 2.

As illustrated in FIGS. 2 and 3, the motor 40a includes a stator 410a mounted to the rear surface (21, see FIG. 1) of the tub (20, see FIG. 1), and a rotor 420a placed around the stator 410a and adapted to be rotated by electromagnetic interaction with the stator 410a.

The stator 410a includes a stator core (not shown), an insulator (not shown), and a plurality of coupling pieces 412 to mount a stator coil 411 and the stator 410a to the rear surface 21 of the tub 20.

The stator 410a includes a plurality of protrusions extending outward from an outer periphery of a doughnut-shaped annular base in a radial direction of the stator 410a. The stator coil 411 is wound on the plurality of protrusions.

The plurality of coupling pieces 412 is arranged in a circumferential direction of the stator 410a at inward positions with respect to the radial direction of the stator 410a.

The coupling pieces 412 respectively have coupling holes 413, into which fastening members (not shown), such as bolts, etc., are insertable.

As the fastening members are inserted into the coupling holes 413, the stator 410a is mounted to the rear surface 21 of the tub 20.

A doughnut-shaped annular plate 414 is attached to a rear surface of the stator 410a at an opposite side of a surface mounted to the rear surface 21 of the tub 20 and in turn, a plurality of power-generation unit magnets 415 is seated on the annular plate 414.

The plurality of power-generation unit magnets 415 seated on the plate 414 is arranged in a circumferential direction.

The rotor 420a includes an annular bottom 421 and a sidewall 422 protruding from the rim of the bottom 421 and is configured to surround the stator 410a.

A plurality of rotor magnets 425 is circumferentially affixed to an inner surface of the sidewall 422. The rotor magnets 425 are arranged to face the stator coil 411 with a predetermined gap therebewteen so as to electromagnetically interact with the stator coil 411.

The bottom 421 is provided with a mount 423, which protrudes so as to be adjacent to the stator 410a.

The mount 423 is perforated with a central mounting bore 424, and the drive shaft (430b, see FIG. 1) extending outward from the tub 20 is fitted at an end thereof into the mounting bore 424.

The bottom 421 is further provided with a plurality of power-generation unit coils 425 arranged in a circumferential direction at positions facing the respective power-generation unit magnets 415.

Hereinafter, operation of the motor 40a will be described.

A magnetic field is created if current is applied to the stator coil 411, and the rotor 420a is rotated by the magnetic field created by the stator coil 411 and a magnetic field created by the rotor magnets 425.

In the relative relationship between the power-generation unit magnets 415 and the power-generation unit coil 426 caused by rotation of the rotor 420a, a magnetic flux density between the power-generation unit magnets 415 and the power-generation unit coil 426 varies, causing electric current to be applied to the power-generation unit coil 426.

With the above-described operation, the rotor 420a is rotated and the power-generation unit coils 426 generate electric power.

An electric wire is used to transmit the electric power generated by the power-generation unit coils 426 to an electric device, such as the balancing device (70, see FIG. 1). Connection of the electric wire is realized using the configuration of the drive shaft for penetration of the electric wire through the rear surface 21 of the tub 20.

The configuration of the drive shaft will be described below with reference to FIGS. 4A, 4B and 4C.

Although embodiments of three types of drive shafts are described herein, the embodiments have a common feature that one end 431 of the drive shaft is fastened into the mounting bore 424 of the rotor 420a and the other end 432 penetrates the rear surface 21 of the tub 20 and is connected to the rear plate 33 of the drum 30.

FIG. 4A is a view illustrating a drive shaft in accordance with one embodiment of the present invention.

As illustrated in FIG. 4A, a drive shaft 430a has an elongated hollow bar shape and includes a bore 435a perforated in the entire longitudinal direction of the drive shaft.

The electric wire 80 extends outward through a first hole 436a of the drive shaft 430a to thereby be connected to the power-generation unit and also, extends into the tub 20 through a second hole 437a to thereby be connected to the electric device, such as the balancing device (70, see FIG. 1).

FIG. 4B is a view illustrating a drive shaft in accordance with another embodiment of the present invention.

As illustrated in FIG. 4B, the drive shaft 430b has an elongated hollow bar shape and includes a bore 435b in a longitudinal direction of the drive shaft.

The bore 435b does not reach a distal portion of the end 431 of the drive shaft 430b and is bent to a peripheral surface of the drive shaft 430b. Thus, a first hole 436b is located at the peripheral surface of the drive shaft 430b and a second hole 437b is located at a distal portion of the other end 432 of the drive shaft 430b.

The electric wire 80 extends outward through the first hole 436b of the drive shaft 430b to thereby be connected to the power-generation unit and also, extends into the tub 20 through the second hole 437b to thereby be connected to the electric device, such as the balancing device (70, see FIG. 1).

FIG. 4C is a view illustrating a drive shaft in accordance with a further embodiment of the present invention.

As illustrated in FIG. 4C, the drive shaft 430c has an elongated bar shape and includes a groove 435c in a longitudinal direction of the entire drive shaft.

The electric wire 80 is fitted into the groove 435c so as to extend from the power-generation unit to the electric device, such as the balancing device (70, see FIG. 1).

Although not illustrated in FIGS. 4A, 4B and 4C, an embodiment in which a drive shaft having no bore or groove is formed as a conductor to be charged with electricity by electric wires connected to both ends of the drive shaft is possible.

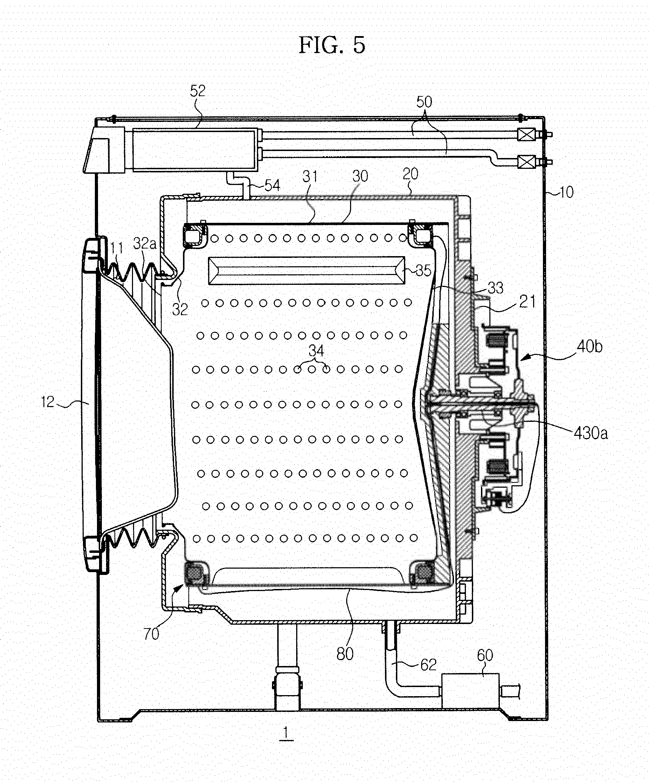

FIG. 5 is a view illustrating the configuration of a washing machine in accordance with another embodiment of the present invention.

The general configuration of the washing machine 1 is identical to that described in relation to FIG. 1 and thus, will not be described below.

The electric wire 80, one end of which is connected to a motor 40b, extends through the drive shaft 430a such that the other end of the electric wire 80 is connected to the balancing device 70, in the same manner as that described in relation to FIG. 1.

Differently from the washing machine 1 of FIG. 1 including the drive shaft 430b having a bent bore, the washing machine 1 illustrated in FIG. 5 includes the drive shaft 430a having a straight bore in the entire longitudinal direction.

It will be appreciated that various shapes of drive shafts may be applied according to embodiments.

The motor 40b of FIG. 5 includes a generator 500.

The generator 500 will be described later.

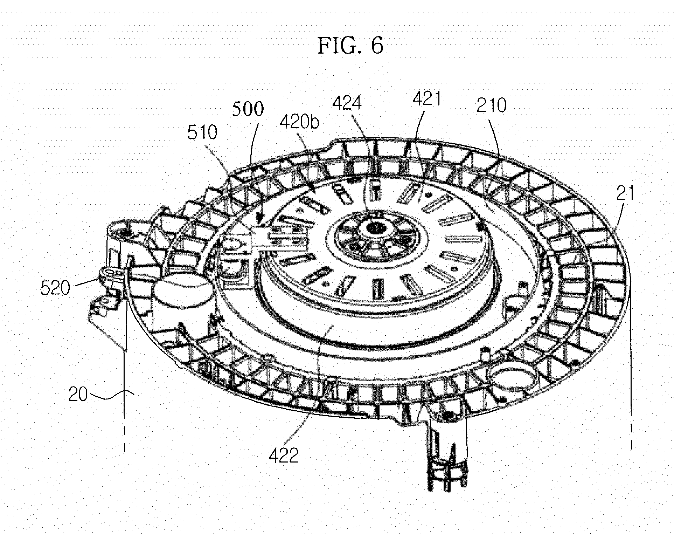

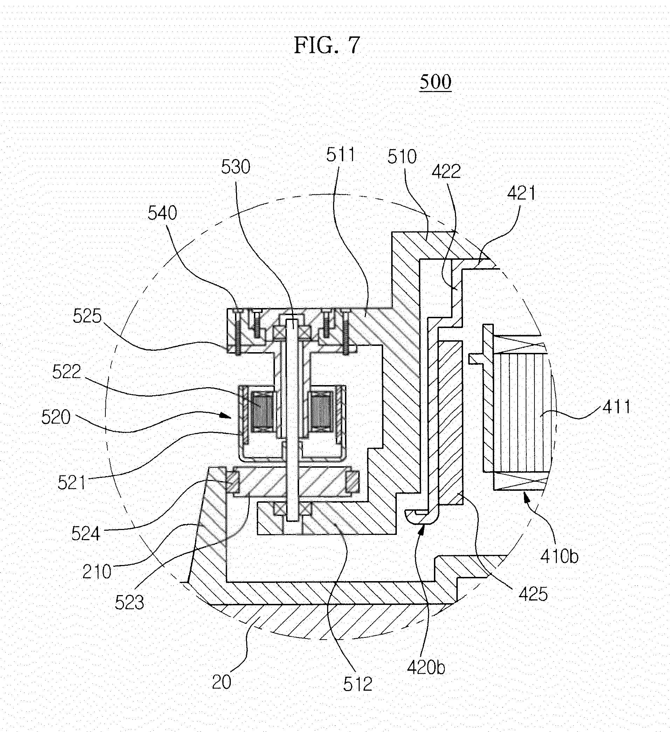

FIG. 6 is a view illustrating a motor usable with a washing machine and a rear surface of a tub in accordance with another embodiment of the present invention, and FIG. 7 is a sectional view illustrating a generator of a motor usable with a washing machine in accordance with another embodiment of the present invention.

As illustrated in FIGS. 6 and 7, the motor is mounted to the rear surface 21 of the tub 20.

The coupling relationship between the stator and the rotor of the motor is identical to that described in FIGS. 2 and 3 except for the power-generation unit coil and the power-generation unit magnets and thus, a description thereof will be omitted below.

The rear surface 21 of the tub 20 is provided with a rib 210 protruding in a circumferential direction about rotor 420b and generator 500.

The generator 500 includes a generating part 520, a rotating part 523 and a support part 510.

The support part 510 is coupled to a rear surface of the bottom 421 of a rotor 420b and serves to support the generator 500. The support part 510 extends parallel to the rear surface of the bottom 421 of the rotor 420b to protrude outward from the rotor 420b and then, is bent at the rim of the rotor 420b so as to extend parallel to the sidewall 422.

The support part 510 includes an upper end support 511 and a lower end support 512, which protrude outward from a lateral surface of the sidewall 422.

The generating part 520 and the rotating part 523 are arranged between the upper support 511 and the lower support 512.

The upper end support 511 is coupled with an upper end 525 of the generating part 520 by means of a fastener 540 and serves to support the generating part 520.

The rotating part 523 is placed beneath a lower end of the generating part 520. The rotating part 523 includes a cushion member 524 radially surrounding the rotating part 523.

The cushion member 524 is positioned to come into contact with the rib 210 at the rear surface 21 of the tub 20.

A shaft 530 penetrates the generating part 520 and the rotating part 523, thereby causing the generating part 520 and the rotating part 523 to be rotated together. One end of the shaft 530 is rotatably secured to the upper end support 511 and the other end of the shaft 530 is rotatably secured to the lower end support 512. Bearings 522 may be inserted between the shaft 530 and the upper end and lower end supports 511 and 512 to ensure free rotation of the shaft 530.

Hereinafter, power-generation operation of the generator 500 will be described.

As described above, if the rotor 420b is rotated by electromagnetic interaction between the rotor magnets 425 and the stator coil 411 of the stator 410b, the generator 500 is rotated together with the rotor 420b via the support part 510 coupled to the rotor 420b.

If the generator 500 is rotated, the rotating part 523 is rotated in an opposite direction of a rotating direction of the rotor 420b via friction between the rotating part 523 and the rib 210 at the rear surface 21 of the tub 20.

Simultaneously with rotation of the rotating part 523, the generating part 520 is rotated by the shaft 530, thereby generating electric power.

The electric power generated by the generating part 520 is transmitted to the electric device via the electric wire (80, see FIG. 5). The electric wire 80 may extend from the motor (40b, see FIG. 5) into the tub 20 through the drive shaft (430a, see FIG. 5).

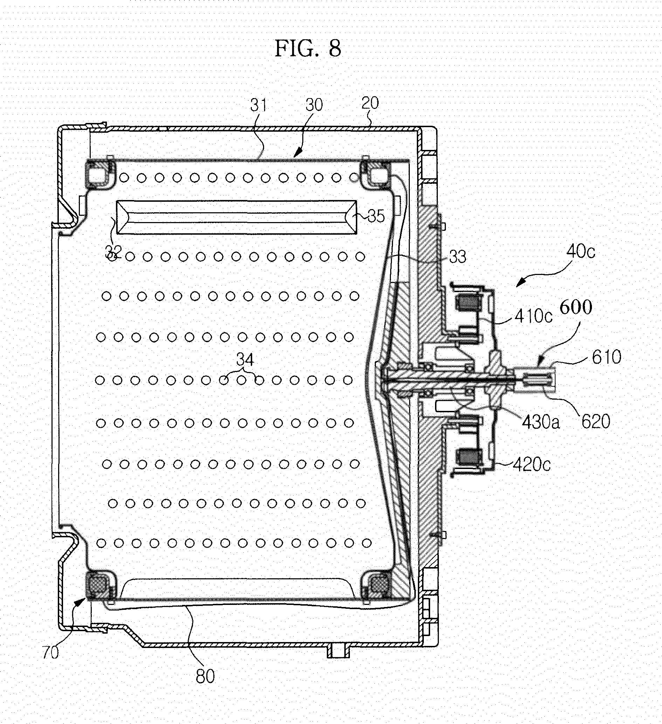

FIG. 8 is a view illustrating the configuration of a washing machine in accordance with a further embodiment of the present invention.

The general configuration of the washing machine 1 is identical to that described in relation to FIG. 1 and thus, will not be described below.

As illustrated in FIG. 8, a slip ring 60 is coupled to the rear surface of a rotor 420c. The slip ring 600 includes a body 610 to secure the slip ring 600 to the rotor 420c and a rotating part 620 rotatably provided in the body 610.

The electric wire 80 extending through the drive shaft is connected to the rotating part 620. The rotating part 620 is configured to maintain rotation of the electric wire 80 without twisting even if the drum 30 is rotated.

The slip ring 600 receives electric power from an external power source and supplies the electric power to the electric device such as the balancing device 70. The slip ring 600 prevents twisting of the electric wire 80 despite rotation of the drum 30.

As is apparent from the above description, according to an aspect, electric power may be supplied to an electric device mounted within a drum through a drive shaft having a simplified configuration.

The electric power to be supplied to the electric device may be generated by a motor without a separate power source.

The disclosure herein has provided example embodiments of a motor usable with a washing machine and a washing machine having the same. However the disclosure is not limited to particular embodiments described herein. For example, although the drum has been described as being configured to accommodate laundry, items other than laundry may be placed in the drum. Additionally, although an example of fastening members includes bolts, other fastening members or fasteners, may include, but are not limited to, screws, pins, rivets, anchors, or alternatively, adhesives, etc., so long as the desired performance may be achieved.

Although a few embodiments of the present invention have been shown and described, it would be appreciated by those skilled in the art that changes may be made in these embodiments without departing from the principles of the invention, the scope of which is defined in the claims

## Claims

1. A washing machine (1) comprising:
a cabinet (10);
a tub (20) placed within the cabinet;
a drum (30) rotatably placed within the tub;
at least one electric device mounted to the drum (30) and operable by electric power;
a motor (40a,b,c) mounted to a rear wall of the tub (20) to rotate the drum; and
a drive shaft (430a,b,c) having one end (432) connected to a rear plate (33) of the drum (30) and another end (431) connected to the motor, wherein the drive shaft is configured to transmit rotational power of the motor to the drum **characterized in that** the drive shaft (430a, b, c) allows a conductor to extend to the at least one electric device, wherein the drive shaft (430a,b) is a hollow drive shaft comprising a hollow circular column to allow passage of an electric wire as the conductor or wherein the drive shaft (430c) is formed as a circular column and includes a longitudinal groove (435c) in a curved peripheral surface of the circular column to allow passage of an electric wire as the conductor along the groove, or wherein the drive shaft is formed as the conductor to transmit electricity.

2. The washing machine according to claim 1, further comprising a power source placed within the cabinet to supply electric power,
wherein the electric power supplied by the power source is transmitted to the at least one electric device through the drive shaft (430a).

3. The washing machine according to claim 2, further comprising a slip ring (600) provided behind the motor (40c) to enable supply of electric power from the power source to the at least one electric device.

4. The washing machine according to one of the previous claims, wherein
said motor (40a,b,c) includes a ring-shaped stator (410a,b,c) and a rotor (420a,b,c) placed around the stator, the rotor being rotatable via electromagnetic interaction with the stator; and said washing machine further comprising an electric power generating device including a power-generation unit (520) to generate electric power to be transmitted to the at least one electric device mounted to the drum (30) via driving of the motor.

5. The washing machine according to claim 4, wherein the power-generation unit includes:
a plurality of magnets (415) affixed in a circumferential direction to a surface of the stator adjacent to the rotor; and
a plurality of coils (426) affixed in the circumferential direction at positions corresponding to the plurality of magnets to a surface of the rotor adjacent to the stator, and
wherein the power-generation unit (520) generates electric power by electromagnetic interaction between the plurality of magnets and the plurality of coils.

6. The washing machine according to claim 4, wherein the power-generation unit includes:
a rib (210) protruding rearward from a rear surface of the tub (20) in a circumferential direction; and
a generator (500) placed at a radial lateral surface of the rotor (420b) so as to come into contact with the rib (210), the generator being rotatable about an axis thereof, and
wherein the generator (500) generates electric power by being rotated via friction with the rib when the rotor is rotated by the external power source.

7. The washing machine according to claim 4, wherein the electric power generating device further includes the drive shaft (430a,b,c) having one end (432) connected to a rear plate (33) of the drum (30) and an other end (431) connected to the motor, the drive shaft being configured to define a passage (435a,b,c) to transmit rotational power of the motor to the drum and to transmit electric power generated by the power-generation unit to the at least one electric device.

8. The washing machine according to claim 4, wherein the at least one electric device includes a light emitting unit to illuminate the interior of the drum.

9. The washing machine according to claim 4, wherein the at least one electric device includes a balancing device drive unit.

## Patentansprüche

1. Waschmaschine (1), umfassend:
ein Gehäuse (10);
einen Bottich (20), der sich in dem Gehäuse befindet;
eine Trommel (30), die drehbar in dem Bottich angeordnet ist;
wenigstens eine elektrische Vorrichtung, die an der Trommel (30) angebracht ist und durch elektrischen Strom betrieben werden kann;
einen Motor (40 a, b, c), der an einer Rückwand des Bottichs (20) angebracht ist, um die Trommel zu drehen; und
eine Antriebswelle (430 a, b, c), deren eines Ende (432) mit einer hinteren Platte (33) der Trommel (30) und deren anderes Ende (431) mit dem Motor verbunden ist,
wobei die Antriebswelle dazu eingerichtet ist, die Rotationskraft des Motors auf die Trommel zu übertragen,
**dadurch gekennzeichnet, dass**
es die Antriebswelle (430 a, b, c) einem Leiter ermöglicht, sich zu der wenigstens einen elektrischen Vorrichtung zu erstrecken, wobei die Antriebswelle (430 a, b) eine hohle Antriebswelle ist, die eine hohle kreisförmige Säule umfasst, um den Durchgang eines Leitungsdrahtes als den Leiter zu ermöglichen, oder die Antriebswelle (430 c) als eine kreisförmige Säule ausgebildet ist und eine Längsnut (435 c) in einer gekrümmten Umfangsfläche der kreisförmigen Säule umfasst, um den Durchgang eines Leitungsdrahtes als den Leiter entlang der Nut zu ermöglichen, oder die Antriebswelle als der Leiter ausgebildet ist, um Elektrizität zu übertragen.

2. Waschmaschine nach Anspruch 1, weiterhin umfassend eine Stromquelle, die in dem Gehäuse untergebracht ist, um elektrischen Strom zuzuführen,
wobei der von der Stromquelle zugeführte elektrische Strom über die Antriebswelle (430 a) an die wenigstens eine elektrische Vorrichtung übertragen wird.

3. Waschmaschine nach Anspruch 2, weiterhin umfassend einen Schleifring (600), der hinter dem Motor (40 c) vorgesehen ist, um die Zufuhr von elektrischem Strom von der Stromquelle zu der wenigstens einen elektrischen Vorrichtung zu ermöglichen.

4. Waschmaschine nach einem der vorhergehenden Ansprüche, bei der
der Motor (40 a, b, c) einen ringförmigen Stator (410 a, b, c) und einen um den Stator herum angeordneten Rotor (420 a, b, c) aufweist, wobei der Rotor durch elektromagnetische Wechselwirkung mit dem Stator drehbar ist;
und die Waschmaschine weiterhin eine elektrische Stromerzeugungsvorrichtung mit einer Stromerzeugungseinheit (520) aufweist, um elektrischen Strom zu erzeugen, der über den Antrieb des Motors auf die wenigstens eine an der Trommel (30) angebrachte elektrische Vorrichtung übertragen wird.

5. Waschmaschine nach Anspruch 4, bei der die Stromerzeugungseinheit umfasst:
eine Vielzahl von Magneten (415), die in einer Umfangsrichtung an einer dem Rotor benachbarten Oberfläche des Stators befestigt sind; und
eine Vielzahl von Spulen (426), die in der Umfangsrichtung an Positionen, die der Vielzahl von Magneten entsprechen, an einer Oberfläche des Rotors neben dem Stator befestigt sind,
wobei die Stromerzeugungseinheit (520) elektrischen Strom durch elektromagnetische Wechselwirkung zwischen der Vielzahl von Magneten und der Vielzahl von Spulen erzeugt.

6. Waschmaschine nach Anspruch 4, bei der die Stromerzeugungseinheit umfasst:
eine Rippe (210), die von einer Hinterseite des Bottichs (20) in einer Umfangsrichtung nach hinten hervorragt; und
einen Generator (500), der an einer radialen Seitenfläche des Rotors (420b) so angeordnet ist, dass er mit der Rippe (210) in Kontakt kommt, wobei der Generator um eine Achse drehbar ist, und
der Generator (500) elektrische Energie erzeugt, indem er durch Reibung mit der Rippe gedreht wird, wenn der Rotor durch die externe Stromquelle gedreht wird.

7. Waschmaschine nach Anspruch 4, bei der die Stromerzeugungsvorrichtung weiterhin die Antriebswelle (430 a, b, c) umfasst, deren eines Ende (432) mit einer hinteren Platte (33) der Trommel (30) und deren anderes Ende (431) mit dem Motor verbunden ist, wobei die Antriebswelle dazu eingerichtet ist, einen Durchgang (435 a, b, c) zu bilden, um die Drehkraft des Motors auf die Trommel zu übertragen und den von der Stromerzeugungseinheit erzeugten elektrischen Strom an die wenigstens eine elektrische Vorrichtung zu übertragen.

8. Waschmaschine nach Anspruch 4, bei der die wenigstens eine elektrische Vorrichtung eine Lichtemittiereinheit zum Beleuchten des Trommelinneren umfasst.

9. Waschmaschine nach Anspruch 4, bei der die wenigstens eine elektrische Vorrichtung eine Auswuchtvorrichtungs-Antriebseinheit umfasst.

## Revendications

1. Machine à laver (1) comprenant :
une armoire (10) ;
un bac (20) placé dans l'armoire ;
un tambour (30) placé de manière rotative à l'intérieur de la cuve ;
au moins un dispositif électrique monté sur le tambour (30) et pouvant être actionné par l'énergie électrique ;
un moteur (40a, b, c) monté sur une paroi arrière de la cuve (20) pour faire tourner le tambour ; et
un arbre d'entraînement (430a, b, c) ayant une extrémité (432) connectée à une plaque arrière (33) du tambour (30) et une autre (431) connectée au moteur,
dans laquelle l'arbre d'entraînement est configuré pour transmettre la puissance de rotation du moteur au tambour,
**caractérisé en ce que** l'arbre d'entraînement (430a, b, c) permet à un conducteur de s'étendre vers ledit au moins un dispositif électrique, dans laquelle l'arbre d'entraînement (430a, b) est un arbre d'entraînement creux comprenant une colonne circulaire creuse pour permettre le passage d'un fil électrique en tant que conducteur ou
dans laquelle l'arbre d'entraînement (430c) est formé comme une colonne circulaire et comprend une rainure longitudinale (435c) dans une surface périphérique incurvée de la colonne circulaire pour permettre le passage d'un fil électrique en tant que conducteur le long de la rainure, ou
dans laquelle l'arbre d'entraînement est formé comme le conducteur pour transmettre l'électricité.

2. Machine à laver selon la revendication 1, comprenant en outre une source d'énergie placée à l'intérieur de l'armoire pour fournir de l'énergie électrique,
dans laquelle l'énergie électrique fournie par la source d'énergie est transmise audit moins un dispositif électrique par l'intermédiaire de l'arbre d'entraînement (430a).

3. Machine à laver selon la revendication 2, comprenant en outre une bague collectrice (600) prévue derrière le moteur (40c) pour permettre l'alimentation en énergie électrique depuis la source d'énergie vers ledit au moins un dispositif électrique.

4. Machine à laver selon l'une des revendications précédentes, dans laquelle ledit moteur (40a, b, c) comprend un stator en forme d'anneau (410a, b, c) et un rotor (420a, b, c) placé autour du stator, le rotor pouvant tourner via une interaction électromagnétique avec le stator ; et ladite machine à laver comprenant en outre un dispositif de génération d'énergie électrique comprenant une unité de génération d'énergie (520) pour générer de l'énergie électrique à transmettre audit moins un dispositif électrique monté sur le tambour (30) via l'entraînement du moteur.

5. Machine à laver selon la revendication 4, dans laquelle l'unité de génération d'énergie comprend :
une pluralité d'aimants (415) fixés dans une direction circonférentielle à une surface du stator adjacente au rotor ; et
une pluralité de bobines (426) fixées dans la direction circonférentielle à des positions correspondant à la pluralité d'aimants sur une surface du rotor adjacente au stator, et
dans laquelle l'unité de génération d'énergie (520) génère de l'énergie électrique par interaction électromagnétique entre la pluralité d'aimants et la pluralité de bobines.

6. Machine à laver selon la revendication 4, dans laquelle l'unité de génération d'énergie comprend :
une nervure (210) faisant saillie vers l'arrière depuis une surface arrière de la cuve (20) dans une direction circonférentielle ; et
un générateur (500) placé au niveau d'une surface latérale radiale du rotor (420b) de manière à entrer en contact avec la nervure (210), le générateur pouvant tourner autour d'un axe de celui-ci, et
dans laquelle le générateur (500) génère de l'énergie électrique en étant mis en rotation par friction avec la nervure lorsque le rotor est mis en rotation par la source d'énergie externe.

7. Machine à laver selon la revendication 4, dans laquelle le dispositif de génération d'énergie électrique comprend en outre l'arbre d'entraînement (430a, b, c) ayant une extrémité (432) reliée à une plaque arrière (33) du tambour (30) et une autre extrémité (431) reliée au moteur, l'arbre d'entraînement étant configuré pour définir un passage (435a, b, c) pour transmettre la puissance de rotation du moteur au tambour et pour transmettre l'énergie électrique générée par l'unité de génération d'énergie audit au moins un dispositif électrique.

8. Machine à laver selon la revendication 4, dans laquelle ledit au moins un dispositif électrique comprend une unité d'émission de lumière pour éclairer l'intérieur du tambour.

9. Machine à laver selon la revendication 4, dans laquelle ledit au moins un dispositif électrique comprend une unité d'entraînement du dispositif d'équilibrage.
